# EUROPÄISCHE PATENTSCHRIFT

(11) **EP 1 464 879 B1**
(45) Veröffentlichungstag und Bekanntmachung des Hinweises auf die Patenterteilung: **19.04.2006**
(21) Anmeldenummer: 04001521.6
(22) Anmeldetag: 24.01.2004
(51) Int. Cl.: F16J 15/34, F16J 15/32

(54) **Dichtung**
Sealing assembly
Joint d'étanchéité

(30) Priorität: 03.04.2003 DE 10315333
(43) Veröffentlichungstag der Anmeldung: 06.10.2004
(73) Patentinhaber: Carl Freudenberg KG, 69469 Weinheim (DE)
(72) Erfinder: Bock, Eberhard, Dr., 69509 Mörlenbach (DE); Klenk, Thomas, Dr., 69214 Eppelheim (DE)

(56) Entgegenhaltungen:
- WO-A-03/031851
- GB-A- 1 438 434
- US-A- 3 671 048
- US-A- 4 306 729

## Beschreibung

### Technisches Gebiet

Die Erfindung befasst sich mit einer Dichtung zum Abdichten von drehenden Wellen oder hin und her bewegten Stangen, mit einem die Welle oder die Stange abdichtenden Dichtkörper mit einer Dichtfläche oder Dichtkante, wobei der Dichtkörper an seiner zur Welle oder Stange gerichteten Oberfläche mit einer die Dichtfläche oder Dichtkante bildenden Auflage aus einem mit einer Polymerdispersion imprägnierten Vlies versehen ist.

Bei dynamischen Dichtungen sind die Kontaktflächen und die Gegenlaufflächen durch die Relativbewegung thermisch und mechanisch im allgemeinen hochbelastet. Um eine gute Abdichtung zu erreichen, werden in der Regel polymere Werkstoffe wie Elastomere, Polyurethane oder PTFE-Compounds eingesetzt. Dabei zeichnen sich die Elastomere und auch die Polyurethane durch hervorragende elastische Eigenschaften, verbunden mit optimaler Anpassungsfähigkeit an die Gegenlauffläche aus. So werden Polyurethane wegen ihres sehr guten Verschleiß- und Weiterreißwiderstandes für Hydraulik- und Pneumatikdichtungen eingesetzt. Dennoch bereiten hohe Reibwerte, geringe thermische und chemische Beständigkeit Probleme. PTFE-Compounds zeichnen sich durch sehr gute Gleiteigenschaften sowie exzellente chemische und thermische Beständigkeit aus. Sie neigen jedoch zum Kriechen, sind hart und passen sich nicht so gut an die Gegenlauffläche an. Es werden deshalb häufig Elastomere und PTFE zusammen in einem Dichtsystem eingesetzt und miteinander verbunden. Das Elastomer übernimmt die Aufgabe der elastischen Anpressung der Dichtkante oder Laufsohle an die Gegenlauffläche. Die Dichtkante selbst besteht aus PTFE. Eine solche Dichtkante hat jedoch den Nachteil geringer Anpassungsfähigkeit im mikroskopischen Bereich. Auch ist auf Grund der geringen Oberflächenenergie des PTFE-Compounds eine stoffschlüssige Verbindung zum Elastomer nur nach aufwändigem Aktivieren seiner Oberfläche möglich, was mit hohen Kosten verbunden ist und, prozessbedingt, auch meist zu hoher Belastung der Umwelt führt.

### Stand der Technik

Aus der älteren DE 102 06 624 ist eine Dichtung bekannt, bei der die Dichtmanschette aus einem PTFE-Compound besteht, die an einem polymeren Werkstoff gehalten ist. Eine solche Dichtung ist für viele Anwendungszwecke gut geeignet.

Eine andere Möglichkeit zeigt die DD 113 608. Dort ist im Bereich der Dichtlippe eine PTFE-Auflage angebracht. Die Auflage hat eine geringe Stärke und ist mit dem elastomeren Tragkörper durch Aufvulkanisieren oder durch eine Verschweißung verbunden.

Durch die DE 198 39 502 C2 ist außerdem eine Konstruktion bekannt, bei der der Dichtring zumindest zwei mit axialem Abstand zueinander benachbarte Dichtlippen hat, wobei die dem abzudichtenden Medium zugewandte erste Dichtlippe aus PTFE besteht. Auch bei dieser Anordnung lässt sich nicht vermeiden, dass die Dichtlippe aus PTFE mit erheblichem Druck an die Welle bzw. Kolbenstange angepresst werden muss und dadurch einem Verschleiß bei gleichzeitig hoher Wärmeerzeugung unterliegt.

Aus der ebenfalls älteren DE 101 48 715 A1 ist eine Radialwellendichtung bekannt, bei der ein Dichtelement aus mehreren Vliesstofflagen eingesetzt wird.

Eine Dichtung, bei der der Dichtkörper mit einer Auflage aus einem mit einer Polymerdispersion imprägnierten Vlies versehen ist, zeigt die GB 1 438 434.

Auch ist der Einsatz einer Staublippe aus einem ungewebtem Material aus Polyesterfasern, das mit einem Latex imprägniert ist, durch die US 4 306 729 bekannt. Die Staublippe stellt jedoch keinen Dichtkörper an sich dar.

Schließlich zeigt die US 3 671 048 die Möglichkeit einer Anbringung eines Dichtringes aus Filz an einer aus Gummi bestehenden Dichtlippe.

### Darstellung der Erfindung

Der Erfindung liegt die Aufgabe zugrunde eine verbesserte Dichtung zu erstellen, die leicht herstellbar ist, eine hohe mechanische Beständigkeit hat und gleichzeitig eine möglichst geringe Reibung aufweist.

Die Lösung der gestellten Aufgabe wird mit den Merkmalen des Anspruchs 1 erreicht. Bei der konstruktiven Ausgestaltung ist es vorteilhaft, wenn das PTFE-Vlies in eine Vertiefung des Dichtkörpers eingefügt wird. Dabei kann das PTFE-Vlies in die Vertiefung des Dichtkörpers eingelegt sein und darin allein formschlüssig gehalten werden. Möglich ist aber auch das PTFE-Vlies mit dem Dichtkörper zu verkleben, beziehungsweise durch Vulkanisation zu verbinden. Der Dichtkörper ist zumindest an einer seiner Oberflächen mit einer Auflage aus einem mit einer Polymerdispersion imprägnierten Vlies versehen ist. Das entstandene Polymervlies kann mit einem Latex, einer PTFE-, FEP- oder PFA-Dispersion imprägniert sein. In Versuchen zeigte sich, dass insbesondere ein mit PTFE imprägniertes Vlies auf vielfältige Weise überraschend gute, nicht vorhersehbare Ergebnisse liefert. So konnten deutlich die Reibungskräfte und der Verschleißwiderstand herabgesetzt werden. Dabei wurde gleichzeitig eine hohe thermische und chemische Beständigkeit in Verbindung mit guter Anpassungsfähigkeit an die Gegenlauffläche erreicht. Auch konnte festgestellt werden, dass bei der Verbindung des PTFE-Vlieses mit dem Dichtkörper auf eine Aktivierung verzichtet werden kann. Auch ohne Aktivierung konnte eine ausreichend feste form- und stoffschlüssige Verbindung erreicht werden.

Als PTFE-Vlies wird ein Material verwendet, das aus mindestens einer mit einer PTFE-Dispersion imprägnierten Vliesstofflage besteht. In der älteren DE 101 48 715 sind PTFE-Vliese als Dichtelemente bei Radialwellendichtungen bereits beschrieben. Insofern wird auf diese ältere Patentanmeldung Bezug genommen. Die Vliesstofflagen bestehen aus mechanisch gebundenem Vliesstoff mit Faserlängen von 3 bis 100 mm insbesondere von 3 bis 20 mm und einem Flächengew. von 20 bis 500 g/m². Die PTFE-Dispersion ist eine wässrige Dispersion, welche bis zu 50 Gew.% an Graphit, Talcum, Glimmer oder Molybdändisulfit bezogen auf die Trockenmasse an PTFE als anorganischen Füflstoff enthalten kann.

Möglich ist aber auch eine Ausbildung, bei der die Auflage auf der zur Außenseite gerichteten Oberfläche des Dichtkörpers mit Abstand zur Dichtfläche oder zur Dichtkante angeordnet ist. Bei dieser Ausführungsform wird die Dichtung bei geringeren Drücken von dem polymeren Dichtkörper selbst gebildet und erst bei höheren Drücken erfolgt ein verstärktes Andrücken des polymeren Dichtkörpers an die Welle beziehungsweise Stange und erst dann kommt die Auflage mit der Welle beziehungsweise Stange in Berührung.

Neben der Ausstattung des Dichtkörpers mit der Auflage aus einem PTFE-Vlies zu Dichtungs- beziehungsweise Versteifungszwecken ist es auch möglich, ergänzend hierzu die Dichtung mit einer Schmutz-Dichtlippe aus einem PTFE-Vlies zu versehen.

Bei der konstruktiven Ausgestaltung ist es vorteilhaft, wenn das PTFE-Vlies in eine Vertiefung des Dichtkörpers eingefügt wird. Dabei kann das PTFE-Vlies in die Vertiefung des Dichtkörpers eingelegt sein und darin allein formschlüssig gehalten werden. Möglich ist aber auch das PTFE-Vlies mit dem Dichtkörper zu verkleben, beziehungsweise durch Vulkanisation zu verbinden.

### Kurzbeschreibung der Zeichnung

In der beiliegenden Zeichnung sind mehrere Ausführungsbeispiele der Erfindung in schematischer Darstellung wiedergegeben.

Es zeigt:
- Fig. 1: einen Längsschnitt durch die Dichtung mit einer an der Welle anliegenden Dichtfläche,
- Fig. 2: eine Dichtung mit einer an der Welle anliegenden Dichtkante,
- Fig. 3: eine Stangendichtung mit einer Dichtkante,
- Fig. 4: eine Stangendichtung mit einer Dichtkante und einer Versteifung des Dichtkörpers,
- Fig. 5: eine nicht erfindungsgemäße Stangendichtung mit einem O-Ring als Sekundärdichtung und Vorspannelement,
- Fig. 6: die Anwendung der Auflage bei einer nicht erfindugsgemäßen Gleitringdichtung
- Fig. 7.: eine nicht erfindungsgemäße Wellendichtung mit einem PTFE-Vlies als Dichtkante und als Versteifungsauflage;
- Fig. 8: eine Stangendichtung mit einer auf der zur Außenseite gerichteten Oberfläche des Dichtkörpers angebrachten Verstärkungsauflage;
- Fig. 9: einen Schnitt durch eine Wellendichtung mit zur Dichtkante versetzt angeordneten Auflage aus einem PTFE-Vlies und einer Dichtlippe gegen Schmutz aus einem PTFE -Vlies;
- Fig. 10: eine Wellendichtung mit einem Federelement aus einem Elastomer,

- Fig. 11: eine nicht erfindungsgemäße Dichtung mit einem PTFE Vlies und einer Stahlfeder und
- Fig. 12: die Anwendung des Erfindungsgedankens bei einer Kassettendichtung.

### Ausführung der Erfindung

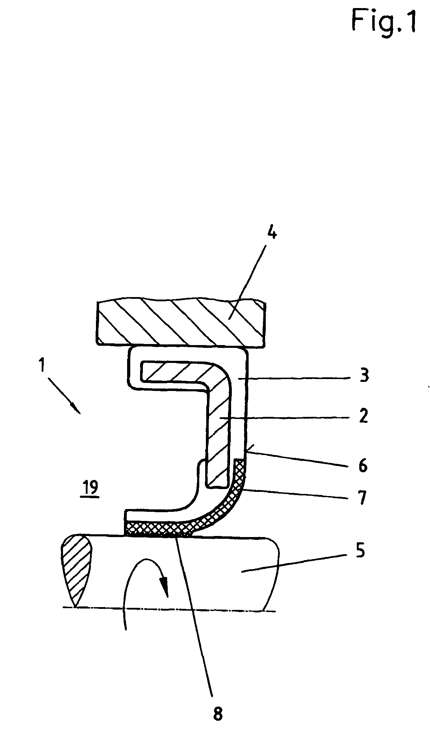

In der Fig. 1 ist schematisch eine Radialwellendichtung gezeigt, die in an sich bekannter Weise aus einem Versteifungsring 2 mit dem Elastomer 3 besteht. Über das Elastomer 3 wird die Dichtung 1 in dem Gehäuse 4 befestigt. An dem zur Welle 5 gerichteten Teil des Elastomers 3 ist der von dem Elastomer 3 gebildete Dichtkörper an seiner nach außen gerichteten Oberfläche 6 mit der Auflage 7 aus einem PTFE Vlies versehen. Die Auflage 7 ist an der Dichtfläche 8 in an sich bekannter Weise mit einer Struktur zur Rückführung des Schmieröls in den Innenraum 9 versehen.

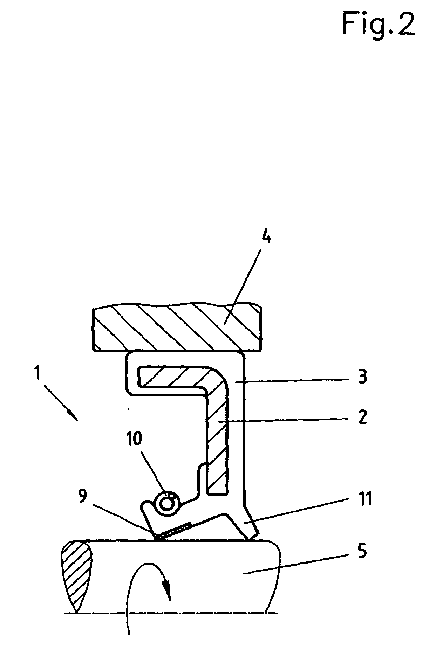

In der Fig. 2 ist eine Dichtung gezeigt, bei der der Dichtkörper 3 die Dichtkante 9 hat. Die Dichtkante 9 wird von der Schraubenfeder 10 zusätzlich an die Welle 5 angepresst. Darüber hinaus ist der Dichtkörper 3 mit einer Staublippe 11 versehen.

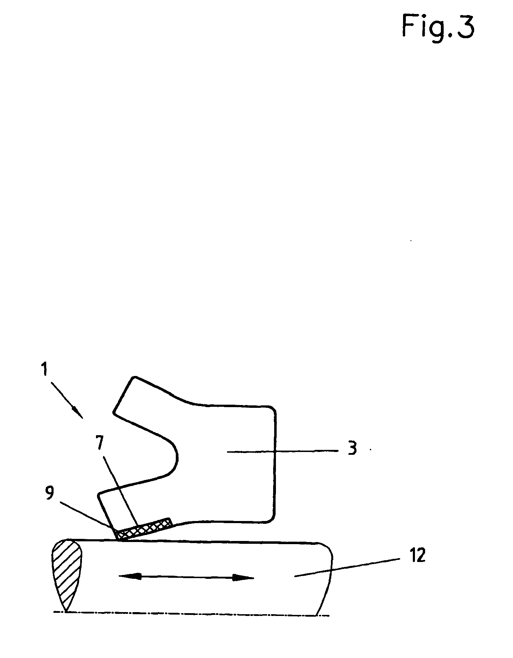

Die Fig. 3 zeigt eine mit der Fig. 2 vergleichbare Ausbildung der Dichtkante 9 bei einer Stangendichtung. Die Dichtkante 9 ist am Dichtkörper 3 angebracht und wird an die Stange 12 angedrückt.

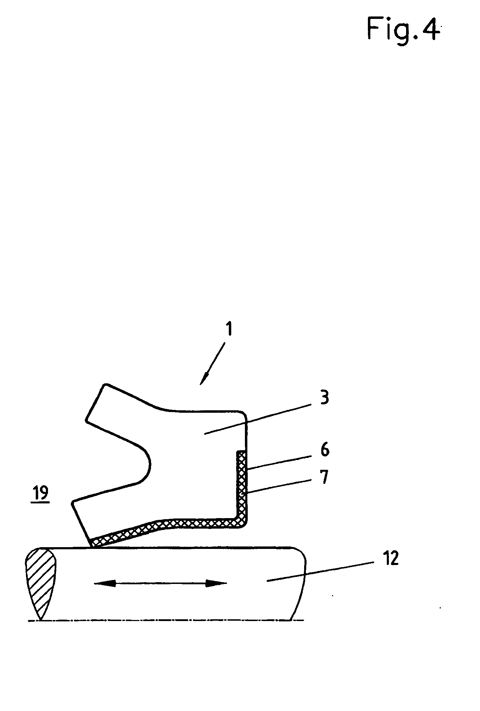

Bei der Ausführungsform nach der Fig. 4 ist der Dichtkörper 3 mit einer Auflage 7 versehen, welche sich im Wesentlichen über die gesamte Außenseite 6 der Oberfläche des Dichtkörpers 3 erstreckt. Hierdurch wird eine erhebliche Versteifung des gesamten Dichtkörpers 3 erreicht.

Insbesondere bei hohen Innendrücken im Innenraum 19 ist eine solche Dichtung von Vorteil, da die Auflage einen zusätzlichen Schutz gegen Spaltextrusion darstellt.

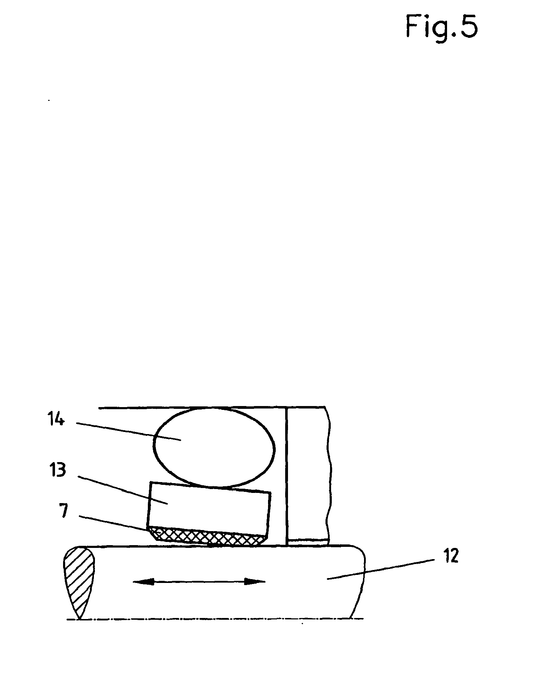

Eine andere Anwendungsmöglichkeit (nicht erfindungsgemäße) zeigt die Fig. 5, bei der ein aus einem Polymer bestehender Dichtring 13 mit einer Auflage 7 versehen ist, welcher an der Stange 12 anliegt. Der Polymerring 13 wird von dem O-Ring 14 an die Stange 12 angedrückt.

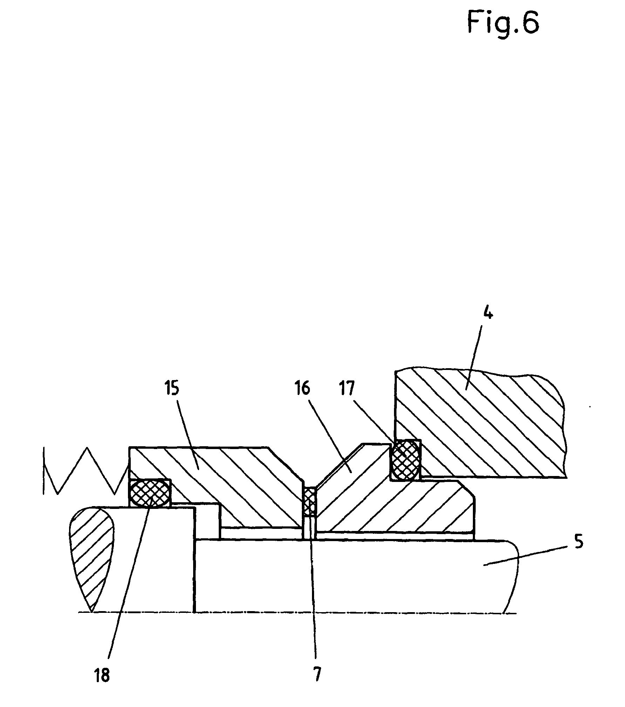

Die Fig. 6 zeigt die Anwendung der Auflage 7 bei einer nicht erfindungsgemäßen Gleitringdichtung. Hierbei ist der Ring 15 mit der Auflage 7 versehen, welche an dem Ring 16 gleitend anliegt. Die Ringe 15 und 16 sind über die Dichtungen 17 und 18 am Gehäuse 4 beziehungsweise an der Welle 5 abgedichtet.

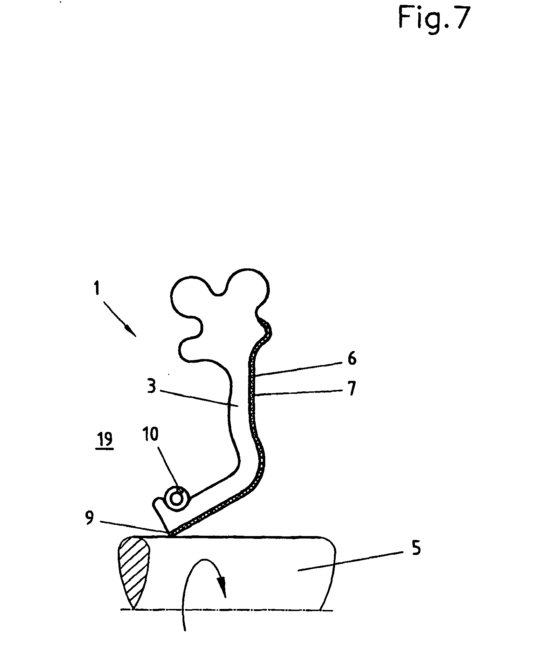

Die Fig. 7 zeigt eine nicht erfindungsgemäße Ausführungsform, bei der die Auflage 7 sich im Wesentlichen über die gesamte Oberfläche 6 des Dichtkörpers 3 erstreckt. Vorgesehen ist eine Dichtkante 9, welche an die Welle 5 gedrückt wird. Hierbei wird der Dichtkörper 3 durch die Feder 10 unterstützt. Bei der auf der Innenseite 19 der Dichtung 1 vorhandenem höheren Druck wirkt die Auflage 7 als Versteifung für den Dichtkörper 3.

Eine andere Möglichkeit der Versteifung des Dichtkörpers 3 kann dadurch erreicht werden, dass die Dichtkante 9 von dem elastomeren Dichtkörper 3 gebildet wird und auf der zum Inneren 19 der Dichtung 1 gerichteten Oberfläche des Dichtkörpers 3 die Auflage 7 angebracht wird. Die so angeordnete Auflage 7 trägt zur Versteifung des Dichtkörpers 3 erheblich bei. Dadurch kann auch eine gute Abdichtung durch die Dichtlippe 9 erreicht werden, deren Verschleißfestigkeit natürlich durch den Einsatz einer Auflage 7 im Bereich der Dichtlippe 9 noch verbessert werden kann.

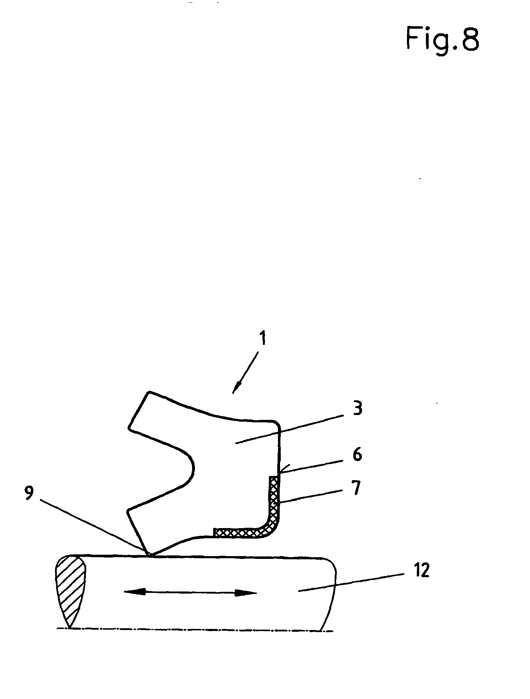

Die Fig. 8 zeigt eine Stangendichtung 1, bei der der Dichtkörper 3 mit der Dichtlippe 9 versehen ist, die an der Stange 12 anliegt. Zur Verringerung der Spaltextrusion des Dichtkörpers 3 ist auf der nach außen gerichteten Oberfläche 6 des Dichtkörpers 3 die Auflage 7 als Verstärkung aufgebracht.

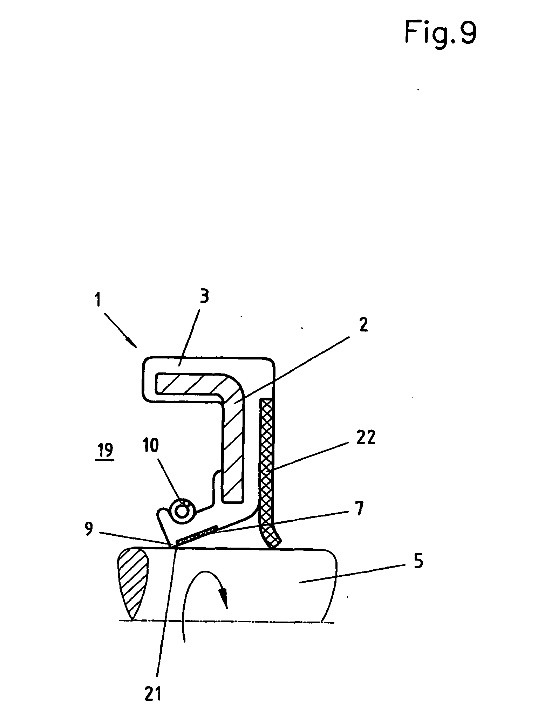

Durch die in der Fig. 9 gezeigte Ausführungsform der Dichtung 1 wird eine gute Abdichtung durch die Dichtkante 9 aus einem Elastomer in Verbindung mit einem guten Verschleißschutz bei der Druckbeaufschlagung aus dem Innenraum 19 der Dichtung 1 erzielt. Der Dichtkörper 3 ist mit dem Stützring 2 versehen und hat eine Dichtlippe 9, die direkt an der Welle 5 anliegt. Mit einem geringen Abstand 21 von der Dichtkante 9 ist in den Dichtkörper 3 eine Auflage 7 eingefügt, die erst bei höheren Drücken im Innenraum 19 zur Anlage an der Welle 5 kommt. Im Betrieb mit niedrigeren Drücken wird die Dichtkante 9 aus elastomerem Material an die Welle 5 durch den Dichtkörper 3 beziehungsweise zusätzlich durch die Wendelfeder 10 an die Welle 5 angedrückt. Bei höheren Drücken im Innenraum 19 wölbt sich der Dichtkörper 3 in Richtung auf die Welle 5 aus, so dass die Auflage 7 an der Welle 5 zur Anlage kommt und dazu führt, dass trotz der höheren Drücke im Innenraum 19 die Reibungskräfte und der Verschleiß zwischen dem Dichtkörper 3 und der Welle 5 gegenüber der direkten Dichtung aus der elastomeren Dichtkante 9 verringert werden. Im gezeigten Beispiel ist die Dichtung 1 mit der Dichtlippe 22 gegen Schmutz versehen, die ebenfalls aus einem PTFE-Vlies gebildet ist.

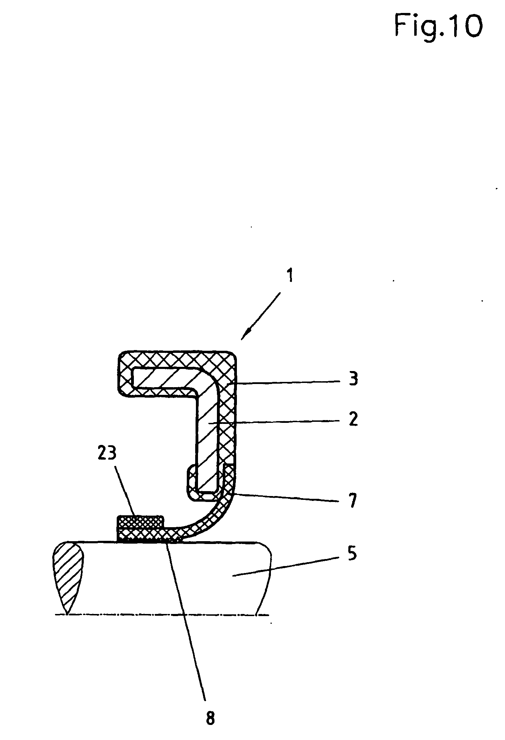

Bei der Konstruktion nach der Fig. 10 ist der Dichtkörper 2 mit der Auflage 7 versehen, die nur mit ihrem radial äußeren Ende am Dichtkörper 3 befestigt ist. Das radial innenliegende Ende der Auflage 7 liegt als Dichtfläche 8 an der Welle 5 an. Um trotz der teilweise nicht vorhandenen Unterstützung der Auflage 7 durch den Dichtkörper 3 eine sichere Abdichtung an der Welle zu erreichen, ist die Auflage 7 an dem radial inneren Ende mit dem Federelement 23 versehen, welches das radial innere Ende an die Welle 5 anpresst.

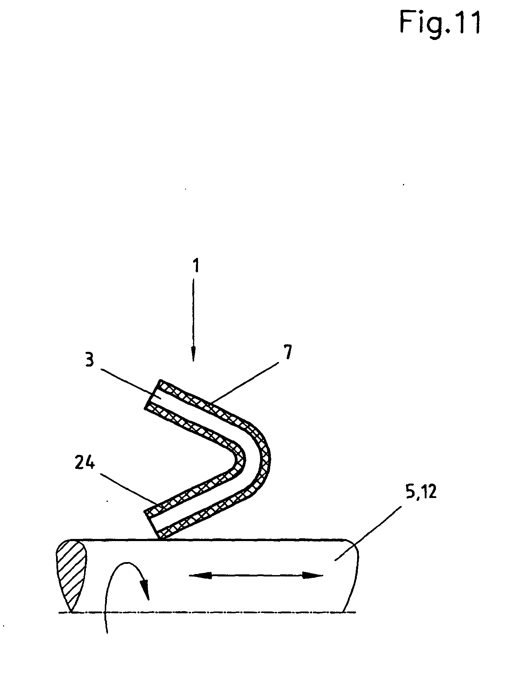

Die Fig. 11 zeigt eine nicht erfindungsgesmäße Ausführungsform der Dichtung 1, die mit einem im Querschnitt gesehen V-förmigen Federelement 24 versehen ist. Der Dichtkörper 3 ist auf seiner nach außen gerichteten Oberfläche vollständig mit der Auflage 7 versehen.

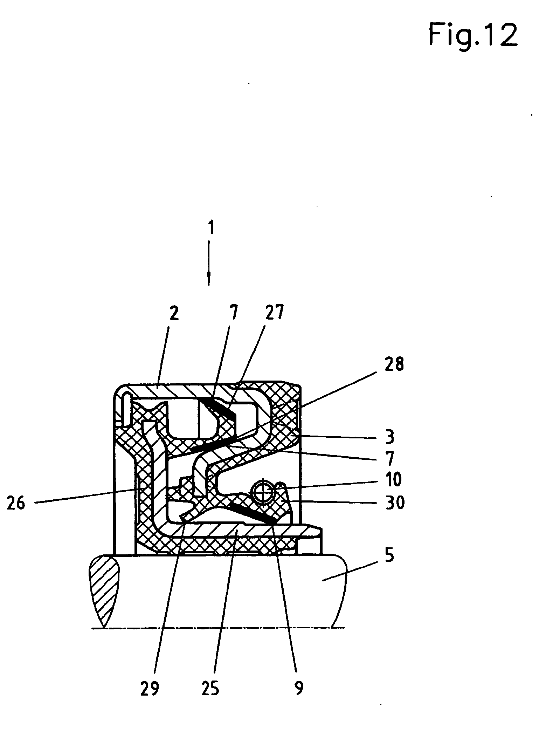

Eine sehr vorteilhafte Anwendung der Dichtung 1 ist bei einer Kassettendichtung gegeben, wie sie in der Fig. 12 dargestellt ist. Die gezeigte Kassettendichtung 1 besteht aus dem Außenring aus Stützring 2, und dem Dichtkörper 3 mit Dichtkante 9. Die Dichtkante 9 wird durch die Lippe 30 des Dichtkörpers 3 an die Lauffläche des Innenrings 25 angedrückt. Der Innenring 25 wird über einen eigenen Dichtkörper 26 an der Welle 5 befestigt. Der Innenring 25 ist mit den Staublippen 27 und 28 versehen, die jeweils mit einer Auflage 7 aus einem PTFE-Vlies versehen sind. Die Staublippen 27 und 28 gleiten auf den innenliegenden Flächen des Stützrings 2. Zusätzlich hierzu hat der Dichtkörper 3 ebenfalls noch eine Staublippe 29, die bei Bedarf ebenfalls mit einer Auflage 7 ausgerüstet werden kann.

Die Befestigung der Auflage 7 am Dichtkörper 3 kann auf verschiedene Weise erfolgen. So ist es beispielsweise möglich, die Auflage 7 in eine entsprechende Vertiefung des Dichtkörpers 3 einzulegen. Eine solche Vertiefung ist beispielsweise in den Ausführungsformen nach den Fig. 1, 2, 3, 4, 8, 9, 10 und 12 gezeigt. Die Auflage 7 liegt in der Vertiefung formschlüssig ein. Möglich ist aber auch eine Verbindung der Auflage 7 mit dem Dichtkörper 3 durch Vulkanisation oder Verkleben.

## Patentansprüche

1. Dichtung (1) zum Abdichten von drehenden Wellen (5) oder hin und her bewegten Stangen (12) mit einem die Welle (5) oder die Stange (12) abdichtenden Dichtkörper (3) mit einer Dichtfläche oder Dichtkante, wobei der Dichtkörper (3) an seiner zur Welle (5) oder Stange (12) gerichteten Oberfläche (6) mit einer die Dichtfläche (8) oder Dichtkante (9) bildenden Auflage (7) aus einem mit einer Polymerdispersion imprägnierten Vlies versehen ist, **dadurch gekennzeichnet, dass** das Vlies in eine Vertiefung des Dichtkörpers (3) eingefügt und darin formschlüssig gehalten ist.

2. Dichtung nach Anspruch 1, **dadurch gekennzeichnet, dass** das Vlies mit dem Dichtkörper (3) verklebt oder durch Vulkanisation verbunden ist.

3. Dichtung nach Anspruch 1 bis 2, **dadurch gekennzeichnet, dass** das Vlies aus mindestens einer, mit einer Polymerdispersion imprägnierten Vliesstofflage besteht.

4. Dichtung nach einem der Ansprüche 1 bis 3, **dadurch gekennzeichnet, dass** die Auflage (7) auf der zur Außenseite gerichteten Oberfläche (6) des Dichtkörpers (3) mit Abstand (21) zur Dichtfläche (8) oder Dichtkante (9) angeordnet ist.

5. Dichtung nach einem der Ansprüche 1 bis 4, **dadurch gekennzeichnet, dass** das Vlies auf der beziehungsweise den Staublippen (27, 28) der Dichtung (1) aufgelegt ist.

## Claims

1. Sealing assembly (1) for sealing rotating shafts (5) or reciprocating bars (12) having a sealing body (3), sealing the shaft (5) or the bar (12), with a sealing surface or sealing edge, the sealing body (3) being provided on its surface (6) that is directed towards the shaft (5) or bar (12) with a covering (7) of a nonwoven impregnated with a polymer dispersion; forming the sealing surface (8) or sealing edge (9), **characterized in that** the nonwoven is inserted into a depression in the sealing body (3) and is held in it with a form fit.

2. Sealing assembly according to Claim 1, **characterized in that** the nonwoven is adhesively bonded to the sealing body (3) or connected to it by vulcanization.

3. Sealing assembly according to Claim 1 or 2, **characterized in that** the nonwoven comprises at least one layer of nonwoven material impregnated with a polymer dispersion.

4. Sealing assembly according to one of Claims 1 to 3, **characterized in that** the covering (7) is arranged on the surface (6) of the sealing body (3) that is directed towards the outside at a distance (21) from the sealing surface (8) or sealing edge (9).

5. Sealing assembly according to one of Claims 1 to 4, **characterized in that** the nonwoven is placed on the dust lip or lips (27, 28) of the sealing assembly (1).

## Revendications

1. Joint d'étanchéité (1) pour rendre étanches des arbres tournants (5) ou des tiges animées d'un mouvement réciproque (12) avec un corps d'étanchéité (3) appliqué de façon étanche sur l'arbre (5) ou la tige (12) par une face d'étanchéité ou une arête d'étanchéité, dans lequel le corps d'étanchéité (3) est pourvu sur sa surface (6) dirigée vers l'arbre (5) ou la tige (12) d'un recouvrement (7) formant la face d'étanchéité (8) ou l'arête d'étanchéité (9) en une nappe imprégnée d'une dispersion de polymères, **caractérisé en ce que** la nappe est insérée dans un creux du corps d'étanchéité (3) et y est maintenue par emboîtement.

2. Joint d'étanchéité selon la revendication 1, **caractérisé en ce que** la nappe est collée ou est assemblée par vulcanisation au corps d'étanchéité (3).

3. Joint d'étanchéité selon la revendication 1 ou 2, **caractérisé en ce que** la nappe se compose d'au moins une couche de matière imprégnée avec une dispersion de polymères.

4. Joint d'étanchéité selon l'une quelconque des revendications 1 à 3, **caractérisé en ce que** le recouvrement (7) est disposé sur la surface (6) du corps d'étanchéité (3) dirigée vers la face extérieure à distance (21) de la face d'étanchéité (8) ou de l'arête d'étanchéité (9).

5. Joint d'étanchéité selon l'une quelconque des revendications 1 à 4, **caractérisé en ce que** la nappe est déposée sur la respectivement les lèvres anti-poussière (27, 28) du joint d'étanchéité (1).
